# EUROPEAN PATENT SPECIFICATION

(11) **EP 3 448 672 B1**
(45) Date of publication and mention of the grant of the patent: **20.04.2022**
(21) Application number: 17722557.0
(22) Date of filing: 24.04.2017
(51) Int. Cl.: B32B 5/20, B32B 27/36, B29C 44/06, B29C 44/12, E04C 2/284, E04B 1/76

(54) **POLYMER FOAM INSULATION STRUCTURES HAVING A FACING LAYER OF A POLYLACTIDE RESIN**
POLYMERSCHAUMISOLIERUNGSSTRUKTUREN MIT EINER DECKSCHICHT AUS EINEM POLYLACTIDHARZ
STRUCTURES ISOLANTES EN MOUSSE POLYMÈRE AYANT UNE COUCHE DE REVÊTEMENT EN RÉSINE POLYLACTIDE

(30) Priority: 28.04.2016 US 201662329124 P
(43) Date of publication of application: 06.03.2019
(73) Proprietor: NatureWorks LLC, Minnetonka, MN 55345 (US)
(72) Inventor: HOSSIENY, Nemat, Minnetonka, MN 55345 (US); OWUSU, Osei A., Minnetonka, MN 55345 (US); NATAL, Manuel A.W., Minnetonka, MN 55345 (US); BENSON, Richard Douglas, Minnetonka, MN 55345 (US)
(74) Representative: Cabinet Beau de Loménie
(86) International application number: PCT/US2017/029192
(87) International publication number: WO 2017/189452

(56) References cited:
- EP-A1- 2 750 851
- EP-A1- 2 841 246
- WO-A1-96/21564
- US-A1- 2014 377 568
- US-A1- 2015 290 907

## Description

This invention relates to polymer foam insulation structures that have a facing sheet on one or more sides of a layer of a polymer foam.

Foam insulation structures are produced in large quantities worldwide. Cabinets and doors for appliances such as refrigerators and freezers represent a significant segment of the market for these structures, but these structures are also useful as thermal insulation for buildings and other constructions, for insulating refrigerated trucks and ship hulls, and for many other uses.

The thermal insulation structures include a polymer foam layer, which is the primary insulating element. The structures also include a facing layer on one or both sides of the polymer foam layer. A facing layer may provide attributes such as strength and stiffness. A facing layer may serve as a protective layer to prevent damage to the foam and may include specific aesthetic or functional features as may be wanted in particular applications.

The polymer foam layer is a cellular material consisting of both closed and open cell morphologies. The cells of the foam are filled with gas. Initially, the gas consists of the blowing agents that are used to produce the foam. Over time, atmospheric gases diffuse into the foam and the blowing agents diffuse out of the foam and become replaced with atmospheric gases. Because the blowing agents are usually a better thermal insulator than the atmospheric gases, the loss of blowing agents leads to a decline in the thermal insulation properties of the structure over time. Certain facing layers retard the rate of blowing agent loss by forming a diffusion barrier.

In refrigerator and freezer cabinets and doors, the polymer foam layer typically is sandwiched between an exterior face (usually a metal such as steel) and an inner polymeric liner. The exterior face provides mechanical strength and puncture resistance. Polymeric materials are chosen for the inner liner material for several reasons, including their lower weight, their ability to be inexpensively thermoformed into complex shapes, and for other aesthetic or functional reasons.

Acrylonitrile-butadiene-styrene (ABS) and high-impact polystyrene (HIPS) resins are most frequently used to make the inner liner. Unfortunately, both of these materials are rather poor diffusion barriers for many gases, including the blowing agents most often used to make the polymer foam. Therefore, atmospheric gases diffuse into the foam and blowing agents diffuse out of the foam and through the liner. Over time, the cabinet becomes less efficient as a thermal insulator and the appliance itself becomes less energy efficient. It would be desirable to provide a foam insulation structure having a better performing inner liner material.

WO 96/21564 A1 describes an insulation panel for a refrigeration appliance unit. The panel comprises a foamed polyurethane and a thermoplastic polyester barrier film to minimize or substantially retard or prevent diffusion loss of carbon dioxide from the polyurethane.

In one aspect, this invention is a foam insulation structure comprising (a) a polymer foam layer having opposing major surfaces and gas-filled cells that contain a physical blowing agent and (b) a non-cellular polylactide sheet containing at least 50% by weight of one or more polylactide resins, wherein said non-cellular polylactide sheet (b) is sealingly affixed to at least one of said opposing major surfaces of the polymer foam layer, as defined in claim 1.

It has been found, very surprisingly, the polylactide resin sheet forms a highly effective barrier to the permeation of atmospheric gases and certain blowing agents from the insulation foam. The foam insulation structure of the invention therefore experiences a surprisingly slow loss of thermal insulation efficiency over time due to the slow diffusion of atmospheric gases and of blowing agents through the polylactide sheet.

In many cases, as with many refrigerators and freezers, the insulation foam layer is produced in a so-called "pour-in-place" process, in which liquid foam precursors are applied to and react at the surface of the facing layer(s) to form the foam. The foam so produced adheres to the facing layer(s) to form the foam insulation structure. The foam precursors in such processes typically include at least one polyisocyanate, water, a physical blowing agent, and most typically one or more polyols. The foaming reaction is exothermic and can produce local temperatures of 60°C to 160°C or more. There is a thermal gradient between the core of the foam and the surface of the liner; with the liner expected to withstand temperatures between 60 and 90°C. Any candidate for use as a liner material must be able to withstand these temperatures and contact with the reactive precursors.

Surprisingly, it has been found that a semi-crystalline polylactide is capable of withstanding exposure to the precursors and the temperatures produced by the exothermic foaming reaction in a pour-in-place process.

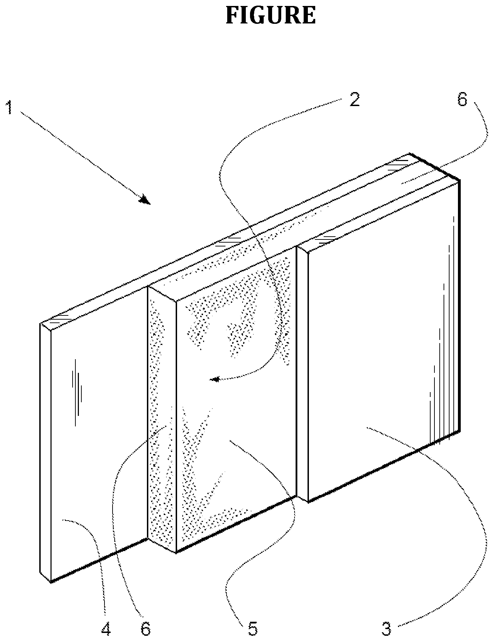

The Figure is a perspective view, partially in section, of an embodiment of a foam insulation structure of the invention.

In the Figure, foam insulation structure 1 includes polymer foam layer 2 having a major surface 5 and an opposing major surface (obscured in this view). Non-cellular polylactide sheet 3 is sealingly affixed to polymer foam layer 2.

By "non-cellular" it is meant the polylactide sheet has a void volume of no greater than 10 volume-%. It more preferably has a void volume of no greater than 5 volume-%, and still more preferably no greater than 2 volume-%.

By "sealingly affixed" it is meant that there are no openings (apart from manufacturing defects, if any) between polymer foam layer 2 and polylactide sheet 3 through which bulk transport of gas in or out of foam insulation structure 1 takes place. Therefore, gas moving into and out of polymer foam layer 2 through major surface 5 therefore must diffuse through polylactide sheet 3 to enter or escape from that side of the structure 1. Typically, polylactide sheet 3 is sealingly affixed to polymer foam layer 2 by virtue of being adhered thereto, either directly or, less preferably, through an intermediate adhesive layer (not shown in the Figure). Polylactide sheet 3 preferably is in direct contact with a major surface of polymer foam layer 2 or in direct contact with an adhesive layer that itself is in direct contact with polymer foam layer 2.

The "major" surfaces of any layer are the opposing surfaces that have the greatest surface areas. The "thickness" of any layer or of the structure as a whole is the smallest orthogonal dimension.

Polymer foam layer 2 is a cellular organic polymer (or mixture of organic polymers). The cells of the polymer foam are filled with one or more gases. The gases include one or more volatilized blowing agents. The cells preferably are mainly closed cells. For example, at least 50%, at least 75%, or at least 90% of the cells of the polymer foam may be closed cells, as determined according to ASTM D6226.

The physical blowing agent is one or more compounds having a boiling temperature of -10°C to 100°C. The physical blowing agent volatilizes during the production of the polymer foam to produce a gas that expands the polymer. The physical blowing agent may include, for example, a hydrocarbon such as a linear or branched alkane having 3 to 8 carbon atoms and/or a cycloalkane having 4 to 8 carbon atoms. The physical blowing agent may be a fluorocarbon, hydrofluorocarbon, fluorochlorocarbon, or hydrofluorochlorocarbon up to 8 carbon atoms such as, for example, 1,1,1,3,3-pentafluoropropane (HFC-245fa), 1,1,1,3,3-pentafluorobutane (HFC-365mfc), 1,1,1,2,3,3,3-heptafluoropropane (HFC-227ea), 1,1,1,2-tetrafluoroethane (HFC-134a); a hydrohaloolefin blowing agent such as trifluoropropene, 1,3,3,3-tetrafluoropropene (1234ze); 1,1,3,3-tetrafluoropropene; 2,2,3,3-tetrafluoropropene (1234yf), 1,2,3,3,3-pentafluoropropene (1225ye); 1,1,1-trifluoropropene; 1,1,1,3,3-pentafluoropropene (1225zc); 1,1,2,3,3-pentafluoropropene (1225yc); (Z)-1,1,1,2,3-pentafluoropropene (1225yez); 1-chloro-3,3,3-trifluoropropene (1233zd) and 1,1,1,4,4,4-hexafluorobut-2-ene (1336mzzm), a dialkyl ether having up to 8 carbon atoms, such as dimethyl ether, ethyl methyl ether or diethyl ether.

Preferred physical blowing agents include hydrocarbons, especially one or more alkanes having 3 to 6 carbon atoms such as n-butane, iso-butane, n-pentane, iso-pentane, n-hexane, iso-hexane, and one or more cycloalkanes such as cyclobutane, cyclopentane, cyclohexane, cycloheptane and cyclooctane. Cyclopentane is an especially preferred physical blowing agent. The physical blowing agent may constitute, for example, 10 to 100, 25 to 100, 25 to 95, or 25 to 75 mole percent of the gas in the cells of the polymer foam.

The gas within the cells of polymer foam layer 2 contains in addition one or more other gases. The gas includes one or more compounds produced by the reaction of a chemical blowing agent such as carbon dioxide (as produced, for example, by reaction of water with an isocyanate group and/or the decomposition of formic acid or formic acid ester) and may further comprise nitrogen (as produced, for example, by the decomposition of an azo blowing agent). The gas in the cells may in addition include other gaseous compounds such as air or one or more components of air. Such other gas or gases, if present, may constitute, for example, 5 to 75 or 25 to 75 mole percent of the gas in the cells of the polymer foam.

The polymer foam is a reaction product of liquid foam precursors that include at least one polyisocyanate, water, physical blowing agent, and optionally one or more polyols and/or isocyanate-reactive amines. Water in these systems functions as a chemical blowing agent and a chain extender by reacting with isocyanate groups to form a carbamic acid that in turn decomposes to carbon dioxide and an amine. The liberated carbon dioxide functions as a blowing gas, and the amine reacts with another isocyanate group to form a urea linkage, thereby extending the polymer chain. The gas-filled cells contain both carbon dioxide and the physical blowing agent. If one or more polyols are present, these react with isocyanate groups to produce urethane linkages. If isocyanate-reactive amines are present, these react with isocyanate groups to produce urea linkages. Examples of suitable systems for producing rigid, closed-cell isocyanate-based foams are described for example in US Patent Nos. 5,444,101, 6,753,357 and 8,937,107, US Published Patent Application No. 2015/0025164 and WO 2013/135746.

The foam density may be, for example, 16 to 80 kg/m³ or 24 to 60 kg/m³.

The thickness of the insulation foam layer may be, for example, at least 0.25 cm, at least 1 cm or at least 2 cm, and may be as much as 50 cm, as much as 25 cm, as much as 12 cm or as much as 7.6 cm.

Non-cellular polylactide sheet 3 contains at least 50%, preferably at least 80%, and more preferably at least 90% by weight of one or more polylactide resins, the non-cellular polylactide sheet containing at least 25 Joules of polylactide crystallites per gram of polylactide resin in the polylactide resin sheet. For the purposes of this invention, the terms "polylactide", "polylactic acid", and "PLA" are used interchangeably to denote polymers having at least 50% by weight of polymerized lactic units (i.e., those having the structure -OC(O)CH(CH₃)-), irrespective of how those lactic units are formed into the polymer. The polylactide resin may contain at least 80%, at least 90%, at least 95%, or at least 98% by weight of lactic units.

The polylactide may further contain repeating units derived from other monomers that are copolymerizable with lactide or lactic acid, such as alkylene oxides (including ethylene oxide, propylene oxide, butylene oxide, tetramethylene oxide), cyclic lactones, or carbonates. Repeating units derived from these other monomers can be present in block and/or random arrangements. These other repeating units suitably constitute up to about 10% by weight of the polylactide, preferably from about 0 to about 5% by weight, especially from about 0 to 2% by weight, of the polylactide, and may be absent.

The polylactide may also contain residues of an initiator compound, which is often used during the polymerization process to provide molecular weight control. Suitable such initiators include, for example, water, alcohols, polyhydroxyl compounds of various types (such as ethylene glycol, propylene glycol, polyethylene glycol, polypropylene glycol, other glycol ethers, glycerin, trimethylolpropane, pentaerythritol, hydroxyl-terminated butadiene polymer), polycarboxyl-containing compounds, and compounds having at least one carboxyl and one hydroxyl group (such as lactic acid or a lactic acid oligomer). The initiator residue preferably constitutes no more than 10%, especially no more than 5%, and especially no more than 2% of the weight of the polylactide, except in the case of a lactic acid or lactic acid oligomer, which can constitute any proportion of the polylactide.

The polylactide may have long-chain branches. Long-chain branches can be introduced in the polylactide in various ways, such as by reacting carboxyl groups on the polylactide with epoxide groups that are present on an acrylate polymer or copolymer. A suitable acrylate polymer or copolymer is characterized in being a solid at 23°C, containing an average of from 2 to about 15 free epoxide groups/molecule (such as about 3 to about 10 or about 4 to about 8 free epoxide groups/molecule), and being a polymerization product of at least one epoxy-functional acrylate or methacrylate monomer, preferably copolymerized with at least one additional monomer. The acrylate polymer or copolymer suitably has a number average molecular weight per epoxide group of about 150 to about 700, such as 200 to 500 or 200 to 400. The acrylate polymer or copolymer suitably has a number average molecular weight of 1000 to 6000, such as about 1500 to 5000 or about 1800 to 3000. Other useful approaches to introducing long-chain branching are described in U. S. Patent Nos. 5,359,026 and 7,015,302 and in WO 06/002372A2.

The number average molecular weight of the polylactide may be, for example, in the range from 10,000 to 200,000 g/mol, as measured by gel permeation chromatography against a polystyrene standard. Number average molecular weights of about 30,000 to 130,000 g/mol are more preferred.

The polylactide resin is in some embodiments characterized by having a relative viscosity of 2 to 6, preferably 2.5 to 5, more preferably 3.5 to 4.5, as measured using a 1% wt/vol solution of the polylactide resin in chloroform against a chloroform standard on a capillary viscometer at 30°C.

A preferred polylactide is a random copolymer of L-lactic acid and D-lactic acid, a block copolymer of L-lactic acid and D-lactic acid, or a mixture of two or more of these, in each case optionally containing residues of an initiator compound and/or branching agent. The preferred polylactide contains at least 95%, especially at least 98%, by weight repeating lactic units.

The lactic units in the polylactide may be either the L- or D- enantiomer, or mixtures thereof. L- and D- lactic units may be distributed randomly or pseudo-randomly in the polylactide resin molecules.

The ratio of the lactic acid enantiomers and the manner in which they are copolymerized (i.e., randomly, block, multiblock, graft, and like) influence the crystalline behavior of the polylactide.

In some embodiments, the polylactide contains 50 to 92% of one lactic acid enantiomer and 8 to 50% of the other lactic acid enantiomer, or 75 to 92% of one lactic acid enantiomer and 8 to 25% of the other lactic acid enantiomer, in all cases based on the total weight of lactic units.

In other embodiments, the polylactide contains 92 to 100%, preferably 92 to 99.5%, especially 95 to 99.5%, of one lactic acid enantiomer (i.e., either L- or D- lactic units) and up to 8%, preferably from 0.5 to 8%, and especially from 0.5 to 5% of the other lactic acid enantiomer, based on the total weight of lactic units.

Blends of two or more polylactides can be used, for example, to obtain desirable crystallization properties for the blend or to obtain a desired molecular weight distribution.

Therefore, in still other embodiments, the polylactide resin is a mixture of a polylactide resin (a) containing 95 to 100% L-lactic units and having a relative viscosity of 3.5 to 4.5 and 2 to 20%, based on the weight of the mixture, of a polylactide resin (b) containing 95 to 100% L-lactic units and a relative viscosity of 2 to 3.25. Another useful mixture is a mixture of a polylactide resin (a) containing 95 to 100% L-lactic units and having a relative viscosity of 3.5 to 4.5 and 2 to 25%, preferably 5 to 15%, based on the weight of the mixture, of a polylactide resin (c) containing 94 to 100% D-lactic units. Yet another useful mixture includes polylactide resin (a), 2 to 20%, based on the weight of the mixture, of a polylactide resin (b), and 2 to 25%, preferably 5 to 15%, based on the weight of the mixture, of a polylactide resin (c).

The polylactide resin(s) may include virgin materials and/or recycled post-industrial or post-consumer polylactide resin(s).

The polylactide resin (or mixture of resins) may be impact-modified, by which it is meant that the resin or mixture is combined with one or more additives that increase the impact strength of the resin relative to that of the polylactide resin by itself. The Dart impact strength of such an impact-modified polylactide resin is preferably at least 4, more preferably at least 8 Joules, as measured by ASTM D1709. The additive generally includes one or more polymeric materials having a glass transition temperature (T_{g}) of no higher than 20°C as measured by differential scanning calorimetry (DSC). The T_{g} of the additive may be 0°C or lower, -20°C or lower, or -35°C or lower.

Examples of impact modifiers include, for example, core-shell rubbers. Core-shell rubber rubbers are particulate materials having at least one rubber core encapsulated by at least one shell material. The rubber core has a T_{g} of no more than 0°C, preferably no more than -10°C. The shell material has a T_{g} of at least 50°C, by DSC. The shell material is preferably grafted onto the core, or is crosslinked. The rubber core suitably constitutes from 50 to 90%, especially from 50 to 85% of the weight of the core-shell rubber particle.

Methods for making core-shell rubbers are well known and are described, for example, in U.S. Pat. Nos. 3,655,825, 3,678,133, 3,668,274, 3,796,771, 3,793,402, 3,808,180, 3,843,735, 3,985,703, and 6,989,190. A suitable method is a two-stage polymerization technique in which the core and shell are produced in two sequential emulsion polymerization stages.

Commercially available core-shell rubbers that are suitable include those sold by the Dow Chemical Company under the Paraloid^{™} brand name, including Paraloid^{™} KM 355 and Paraloid^{™} BPM 500 core-shell rubbers, those sold by Kaneka under the KaneAce^{™} brand name, such as KaneAce ECO-100 core-shell rubber and Metablen^{™} products such as Metablen S2001, S2006, S2501, and W600A, sold by Mitsubishi Rayon Co., Ltd.

Other impact modifiers include rubbery polyolefins, various acrylic rubbers, ethylene-acrylic acid copolymers (as well as alkali metal salts thereof), ethylene-glycidyl methacrylate copolymers, various silicone rubbers, polymers and copolymers of conjugated dienes, polyurethane rubbers.

A suitable amount of impact modifier is at least 0.25 parts by weight per 100 parts by weight of polylactide resin(s) and, for example, up to 25 parts, up to 20 parts, up to 15 parts or up to 10 parts per 100 parts by weight of polylactide resin(s).

The polylactide resin(s) may also include one or more crystallization promoters. These include, for example, one or more additives that function as crystal nucleators and/or as crystallization accelerators. Among the suitable crystallization promoters are finely divided solid materials that are thermally stable (i.e., do not melt or degrade) under the conditions of processing the polylactide resin to make the foam insulation structure. Examples of such finely divided solid materials include mineral powders such as talc, various clays, as well as particulate high-melting thermoplastic polymers or thermoset polymers. Other crystallization promoters include acid amide compounds such as are described in EP 1887044, including ethylene bis (lauric acid amide), ethylene bis (isooleic acid amide), and ethylene bis (stearic acid amide). Crystallization accelerators include various plasticizers for the polylactide resin(s), including, for example, various citrate esters, glycerol fatty acid esters, various adipate esters.

Crystallization promoters are conveniently used in amounts of 0.01 to 10 parts by weight per 100 parts by weight of polylactide resin(s).

Polylactide sheet 3 may contain up to about 45%, preferably up to 30%, by weight of one or more other thermoplastic polymers. Such other thermoplastic polymer(s) preferably are miscible with the polylactide resin(s) contained in polylactide sheet 3.

Polylactide sheet 3 may also contain other ingredients such as colorants, preservatives, anti-oxidants, and/or other stabilizers and biocides. These may constitute up to 10 parts by weight per 100 parts by weight of the polylactide resin(s).

Polylactide sheet 3 contains polylactide crystallites. Polylactide crystallites are crystals having crystalline melting temperatures of about 140°C to 240°C, formed by the ordering of polylactide chains in the polylactide sheet. The range of crystalline melting temperatures reflects the number of different crystalline structures that form in polylactide resins, and the fact that the crystallites often have varying amounts of crystal defects that affect their melting temperatures. Polylactide crystallites having melting temperatures of 140°C to about 195°C are generally "PLA homocrystals", which are formed when a single polylactide resin of high enantio-purity crystallizes by itself. Polylactide crystallites having melting temperatures from about 200°C to 240°C are typically "stereocomplex" crystallites that form when a polylactide resin containing mostly L-lactic acid enantiomers crystallizes with another polylactide resin containing mostly D-lactic acid enantiomers or from block copolymers with sufficiently enantio-pure blocks of lactic units to allow crystals to form. Polylactide sheet 3 may contain polylactide crystals of either type or both types. Also included within the polylactide crystals are polylactide/blowing agent cocrystals as described below.

Crystallinity in the polylactide sheet is conveniently measured using differential scanning calorimetry (DSC) methods. The amount of such crystallinity is expressed herein in terms of J/g, *i.e.,* the enthalpy of melting, in Joules, of the polylactide crystals in the sample divided by the weight in grams of polylactide(s) in the sample. A convenient test protocol for making DSC measurements is to heat a 5-10 milligram sample from 25° to 225°C at 20°C/minute under air on a Mettler Toledo DSC 821e calorimeter running Star V. 6.0 software or equivalent apparatus.

The polylactide sheet contains at least 25 J/g, or at least 35 J/g of polylactide crystallites.

The amount of crystallization present in polylactide sheet 3 will depend on factors that include the particular polylactide resin(s) present, the presence of nucleating agents and/or plasticizers, and the thermal and processing history of the sheet. Heating the sheet, during or following its manufacture, to a temperature between the glass transition temperature of the polylactide resin(s) and its crystalline melting temperature promotes the formation of crystallites. Orienting the polymer during processing also promotes crystal formation.

The embodiment shown in the Figure includes optional opposing layer 4 which is affixed to the opposing major surface of polymer foam layer 2. It is generally preferred that opposing layer 4, when present, presents a barrier to the diffusion of atmospheric gases into and the escape of blowing agents from polymer foam layer 2. Opposing layer 4 preferably is non-cellular (as defined above) and sealingly affixed to polymer foam layer 2, for example by virtue of being adhered thereto, either directly or, less preferably, through an optional intermediate adhesive layer (not shown in the Figure). Opposing layer 4 preferably is in direct contact with a major surface of polymer foam layer 2, or in direct contact with an adhesive layer that itself is in direct contact with polymer foam layer 2.

In some embodiments, opposing layer 4 is a non-cellular polylactide sheet as described with regard to polylactide sheet 3. Alternatively, opposing layer 4 may be a metal layer; a layer of a different polymer (i.e., a polymer which is not a polylactide resin), which different polymer may be, for example, a thermoplastic or thermoset resin; a composite material; a cellulosic material such as wood, paper, or cardboard; a ceramic material such as glass. In some embodiments, opposing layer 4 includes one or more recycled post-industrial and/or post-consumer polymers. Opposing layer 4 may be a multilayer structure.

The peripheral edges, such as edges 6 of polymer foam layer 2 also preferably are covered with edge coverings (not shown) that present a barrier to the escape of blowing agents. In especially preferred embodiments, polylactide sheet 3, opposing layer 4, and the edge coverings together form a sealed container that encloses all surfaces of polymer foam layer 2. The edge coverings, when present, may be integrated with opposing layer 4 and/or polylactide sheet 3, if desired.

Polylactide sheet 3 may be a multilayer structure containing at least one non-cellular polylactide resin layer as described above and one or more additional layer(s). The additional layer(s) may be layer(s) of a polylactide resin or layer(s) of another material, such as are described with respect to opposing layer 4. In such a multilayer structure, the layer facing polymer foam layer 2 is a non-cellular polylactide sheet as described before. Because of the unexpectedly good barrier properties of the polylactide sheet 3, it is not necessary that any such additional layers have good barrier properties. Such additional layers may be cellular or non-cellular. In some embodiments, one or more of such additional layers contains one or more recycled post-industrial and/or post-consumer polymers.

Polylactide sheet 3 preferably exhibits a storage modulus, as measured by dynamic mechanical analysis (DMA) at a frequency of 1 Hz and a ramp rate of 5°C/min, of at least 10 MPa at 80°C. In specific embodiments, polylactide sheet 3 exhibits a storage modulus of at least 10 MPa at 100°C, a storage modulus of at least 10 MPa at 120°C, a storage modulus of at least 50 MPa at 80°C, a storage modulus of at least 50 MPa at 100°C, a storage modulus of at least 50 MPa at 120°C, a storage modulus of at least 100 MPa at 80°C, a storage modulus of at least 100 MPa at 100°C or a storage modulus of at least 100 MPa at 120°C.

Polylactide sheet 3 preferably exhibits a first heat deformation temperature of at least 60°C, preferably at least 80°C, and more preferably at least 90°C. First heat deformation temperature is measured by heating the sheet in an oven at 1°C/min from 25°C to 125°C, taking images of the samples with a camera every 2 minutes. The images are examined visually to determine the temperature at which deformation or movement of the part is first observed (the first deformation temperature (FDT)).

Polylactide sheet 3 may have a thickness of, for example, 0.05 to 10 mm or more, preferably 0.4 to 10 mm or 0.8 to 5 mm. If polylactide sheet 3 is a layer of a multilayer structure, it preferably has a thickness of 0.05 to 9 mm, more preferably 0.15 to 5 mm and still more preferably 0.8 to 2 mm, and the multilayer structure preferably has a total thickness of 0.4 to 10 mm, more preferably 0.8 to 5 mm.

Although polylactide sheet 3 and opposing layer 4 are represented in the Figure as having a planar geometry, this is not necessary. Either or both of polylactide sheet 3 and opposing layer 4 may have non-planar geometries and may be formed into complex shapes to incorporate various functional or other desirable features. Similarly, polymer foam layer 2 may have a non-planar geometry, and may not have a constant thickness.

Foam insulation structure 1 can be made in various ways. In one method, the various layers are made separately and assembled together to form the structure by, for example, the use of adhesive layers, by heat-softening one or more of the layers and then laminating them together so they adhere to each other, or similar methods.

In another method, foam insulation structure 1 can be made in a coextrusion process in which the various layers are simultaneously extruded and the extrudates representing the various layers are brought together while still heat-softened so they adhere together to form the structure.

In other methods, foam insulation structure 1 is made in a foam-in-place method that comprises (1) applying a foam precursor mixture containing at least one polyisocyanate, water, and a physical blowing agent to the surface of polylactide sheet 3 or both polylactide sheet 3 and opposing layer 4, and (2) curing the foam precursor mixture while in contact with polylactide sheet 3 or both polylactide sheet 3 and opposing layer 4 to form polymeric thermal insulation foam layer 2 adhered to polylactide sheet 3 or both polylactide sheet 3 and opposing layer 4. This is a preferred method for making appliance parts such as refrigerator and freezer cabinets and doors as well as smaller thermal insulating products such as coolers.

For example, appliances such as refrigerators and freezers can be manufactured in accordance with the invention by separately producing an inner liner that includes polylactide sheet 3 and an outer shell which corresponds to opposing layer 4. The inner liner and outer shell are positioned together such that a cavity is formed between them. The insulation foam layer 2 is then produced by introducing the foam precursor mixture into the cavity and allowing the precursor to react. As the precursor mixture reacts, it expands to fill the cavity due to the production of gas by the blowing agent(s) and then cures to form polymeric foam layer 2.

The curing of the foam precursor mixture is usually exothermic and therefore experiences a significant temperature rise due to the exothermic heat of reaction. This exposes polylactide sheet 3 to elevated temperatures that may reach, for example, 60° to 160°C or more. A semi-crystalline polylactide resin (*i.e.,* one containing 25 J/g or more of polylactide crystallites per gram of polylactide) withstands these temperatures better than an amorphous resin (*i.e.,* one containing less than 25 J/g of polylactide crystallites per gram of polylactide). Therefore, to make the thermal insulation structure by a foam-in-place process, polylactide sheet 3 contains at least 25 J/g of polylactide crystallites.

Planar polylactide sheets 3 are conveniently made using an extrusion process, whereby the polylactide resin(s) and other components of the sheet (including, for example, impact modifiers and crystallization promoters) are combined and heated to a temperature above the crystalline melting temperature of the polylactide resin(s), passing the molten mixture through a die to produce the sheet, and the sheet is subsequently cooled to solidify the polylactide resin(s). If desired, the extruded sheet may be calendered, passed between nip rollers, or otherwise processed to adjust its thickness further.

Polylactide sheets 3 having a non-planar geometry can be produced from planar polylactide sheets via a thermoforming process. In the thermoforming process, the polylactide sheet is softened by heating it to a temperature above the glass transition temperature of the polylactide resin(s), positioning the softened sheet over a positive or negative mold, and drawing and/or pressure forming the sheet on the mold to form a thermoformed part. In such a process, the polylactide sheet may be heated, for example, until it attains a surface temperature of 100° to 200°C, 120° to 200°C, or 120° to 180°C, and then formed on the mold. Surface temperature is conveniently measured by detecting infrared radiation emitted from the surface of the polylactide sheet using an infrared thermometer or an infrared thermal imaging camera.

PLA crystallites can be formed in polylactide sheet 3 by maintaining the sheet within a temperature range between the glass transition temperature and the crystalline melting temperature of the PLA crystallites. To produce a polylactide sheet 3 having a crystallinity of at least 25 J/g, suitable conditions include, for example, maintaining the sheet at a temperature of 80° to 160°C, preferably 80° to 140°C, and more preferably 90° to 130°C for a period of 30 seconds to five minutes, preferably 45 seconds to 5 minutes, and more preferably 60 seconds to 3 minutes.

Conversely, an amorphous polylactide sheet is generally produced by avoiding prolonged exposure to crystallization conditions. Some small amount of crystallinity will be produced during the extrusion and/or thermoforming steps described above, as the sheet will necessarily pass through the range of temperatures at which crystallization takes place, as it cools from the process temperatures. In such cases, however, crystallization can be minimized by cooling the resin rapidly to quench it before significant crystallization takes place.

Polylactide sheet 3 can be crystallized during the thermoforming step. This is often desirable to avoid post-demold processing steps to crystallize the thermoformed part. Some crystallization may occur during the step of heating the polylactide sheet in preparation for thermoforming. Some stress-induced crystallization may take place as the sheet is stretched during the forming process. Further crystallization can take place on the mold, particularly if the temperature of the polylactide sheet is maintained within the range of 60° to 160°C, preferably 80° to 140°C, and more preferably 90° to 130°C, and the residence time of the sheet on the mold at such temperature is 30 seconds to 10 minutes, preferably 45 seconds to 5 minutes, and more preferably 60 seconds to 2 minutes.

The thermoforming process can be conducted using apparatus and general methods such as are described, for example, by Throne in "Thermoforming Crystallizing Poly(ethylene terephthalate) (CPET)", Advances in Polymer Technology, Vol. 8, 131-146 (1988). Drawing is preferably performed using vacuum. The mold may include a positive half that is inserted into the negative half during the process to provide positive mold forming. It may also be desirable to pre-stretch the sheet; if so, a pressure cap or other pre-stretching device may be used and actuated prior to drawing the sheet into the mold. Once the part is formed and cooled below its T_{g}, it is demolded and trimmed if necessary.

The foam insulation structure of the invention is useful as cabinets and doors for appliances such as refrigerators and freezers; for making coolers and other insulated containers; for making insulated walls, roofs, ceilings of buildings, and other constructions; for insulating and as insulation structures for insulating ship hulls, refrigerated vehicles.

The foam insulation structure of the invention experiences a surprisingly slow loss of thermal insulation efficiency over time due to the slow diffusion of atmospheric gases and of blowing agents through the polylactide sheet. Typically, the structure exhibits an initial rise of thermal conductivity or k-factor as it is aged. This initial rise in k-factor may be exhibited, for example, over a period of a few days to about 2 weeks, and is believed to be attributable to the diffusion of air and moisture that is trapped during construction of the structure and diffusion into the foam where it equilibrates, resulting in an increased k-factor. Such an initial rise in k-factor is typical of foam insulation structures in which a polymer foam is encased with an outer shell structure.

With conventional foam insulation structures having a HIPS or similar shell, a significant but more gradual increase in k-factor is seen over time, once the initial, rapid increase in k-factor is completed. In those conventional foam structures, this more gradual increase is due to the diffusion of air and moisture into the closed cells of the foam, and the slow diffusion of blowing agents out of the closed cell. Such a mechanism is described, for example, by Wilkes et al., "Aging of Polyurethane Foam Refrigerator Panels-Initial Results with Third Generation Blowing Agents", presented at The Earth Technologies Forum, Washington, D.C., October 26-28, 1998.

Unlike those conventional foam insulation structures just described, the k-factor of the foam insulation structure of this invention changes very slowly with time after that initial increase due to the equilibration of trapped air. The rate of k-factor increase is often close to zero for extended periods of time.

Although the invention is not limited to any theory, the excellent barrier properties of the polylactide resin sheet may be attributable at least in part to the formation of cocrystals of the polylactide resin and the physical blowing agent. As the physical blowing agent escapes from polymer foam layer 2 and migrates into polylactide sheet 3, the blowing agent is believed to form cocrystals with the polylactide resin. Thus the polylactide resin forms a crystalline complex (Σ-form cocrystals) with the physical blowing agent with the consequent encapsulation of the cocrystals by the host polylactide resin, (see P. Shaiju et al., Macromolecules 2016, 49, 224-233 and Hironori Marubayashi, et al., J. Phys. Chem. B 2013, 117, 385-397). The presence of these cocrystals is believed to contribute to the barrier properties of the polylactide sheet. Loss of the physical blowing agent through the polylactide sheet is slowed because it is captured in or by the cocrystals. Capture of the physical blowing agent in the polylactide sheet and subsequent cocrystallization creates a barrier that prevents or at least slows the migration of the physical blowing agent into the sheet from the polymer foam layer. The presence of the polylactide resin/blowing agent cocrystals can be determined using X-ray scattering methods, such as are described, for example, by Shaiju et al., Macromolecules 2016, 49, 224-233.

The following examples illustrate the invention, but are not intended to limit it in any way. All parts and percentages are by weight unless otherwise indicated.

Polylactide A is a linear, random copolymer containing 95.5% L-lactic units and 4.5% D-lactic units having a relative viscosity of 3.5 to 4.5.

Polylactide B is a linear, random copolymer containing about 99.5% L-lactic enantiomer units and 0.5% D-lactic enantiomer units having a relative viscosity of 2 to 3.25.

Polylactide C is a linear, random copolymer containing 1% L-lactic enantiomer units and 99% D-lactic enantiomer units.

Polylactide D is a linear, random copolymer containing 99.75% L-lactic units and 0.25% D-lactic units having a relative viscosity of 3.5 to 4.5.

### Example 1

A mixture of 95% of Polylactide A, 2.5% titanium dioxide particles, and 2.5% by weight of a core-shell rubber is extruded into duplicate 1.2-mm-thick, non-cellular sheets on a single screw extruder. The extruded sheets each contain less than 10 Joules of polylactide crystallinity per gram of polylactide resin.

A 50-mm-thick layer of a closed-cell, rigid polyurethane foam is formed between the extruded polylactide sheets in a pour-in-place process, to form a three-layer sandwich structure with the foam layer in the center. The polyurethane foam is a product obtained by reacting a polyisocyanate, a polyol mixture, and water in the presence of cyclopentane, and therefore contains a mixture of carbon dioxide and cyclopentane in its cells. All exposed edges of the foam layer are covered with a gas-impermeable metallic tape.

The thermal conductivity of the resulting assembly (Ex. 1) is measured according to DIN 52616 at a mean temperature of 10°C. The assembly is then aged for 629 days under atmospheric pressure air at a temperature of 23 ± 2°C and 50 ± 5% relative humidity. The thermal conductivity is measured periodically during and at the end of the aging period.

For comparison, a similar assembly (Comp. Sample A) is prepared and evaluated in the same way, replacing the polylactide sheets with layers of non-cellular high impact polystyrene (HIPS) of equivalent thickness.

The results of the testing are as follows:

| Aging Time | Thermal Conductivity, mW/K/m | |
|---|---|---|
| | Example 1 | Comp. Sample A |
| Initial | 20.7 | 20.5 |
| 7 days | 21.5 | 21.1 |
| 13 days | 21.6 | 21.3 |
| 20 days | 21.7 | 21.3 |
| 27 days | 21.7 | 21.4 |
| 56 days | 21.8 | 21.5 |
| 118 days | 21.5 | 22.0 |
| 146 days | 21.6 | 22.5 |
| 181 days | 21.4 | 22.7 |
| 244 days | 21.3 | 23.6 |
| 260 days | 21.5 | 24.0 |
| 455 days | 21.1 | 24.9 |
| 629 days | 21.4 | 25.8 |

The assemblies each have similar thermal conductivities initially, and in each case there is an increase of about 5% over the initial value over the first 27 days of aging. As discussed above, this is believed to be attributable to atmospheric gases that are trapped during construction of the foam structure and equilibrate into the foam. With additional aging, the thermal conductivities of Example 1 and Comparative Sample A diverge dramatically. Comparative Sample A continues to exhibit a regular and large increase in thermal conductivity during the entire course of the evaluation, which is attributable to the gradual diffusion of atmospheric gases and blowing agents through the HIPS layer. Example 1, on the other hand, exhibits no such increase. The behavior of Example 1 suggests that, after an initial period, the diffusion of gases into and out of the polymer foam layer decreases to very low levels, if it is not stopped altogether.

### Example 2

A dry-blended mixture of about 80% of Polylactide A, about 10% of Polylactide B and about 10% of Polylactide C is extruded into 1.3-mm sheets on a single screw extruder. The extruded sheet is formed on chill rolls set at temperatures of 35-40°C to quench the sheet and maintain the crystallinity at less than 10 J/g.

The first deformation temperature of one of the sheets is about 56°C.

Duplicate sheet samples are thermoformed on an off-line, roll-fed Kiefel thermoformer. A cup mold [2.75-in (base) × 3.5-in (top) × 2.25-in (height)] with a draw ratio ≈ 4× is used to thermoform the parts. The sheets are heated to surface temperatures as indicated in Table 1, and then thermoformed in the cup mold. The mold temperature is 90°C. Residence time on the mold is 30 seconds.

The crystallinity of the walls and the base of the thermoformed parts is measured by DSC. Thermoformed parts are subjected to first deformation test (FDT) as described before. Results are as indicated in Table 1.

**Table 1**

| **Sheet surface temperature (°C)** | **Side wall crystallinity (J/g)** | **Base crystallinity (J/g)** | **FDT (°C)** |
|---|---|---|---|
| 127° | 47.9 | 30.9 | 90° (4 min) |
| 148° | 44.9 | 44.6 | 90° (4 min) |
| 158° | 43.8 | 22.1 | 90° (4 min) |
| 168° | 42.1 | 24.3 | 90° (4 min) |

The FDT of the thermoformed parts indicates that semi-crystalline polylactide sheet is thermally stable enough to be used to produce foam insulation structures of the invention in a pour-in-place process. A wide processing window of 127°C to at least 168°C can be used in thermoforming this polylactide resin blend.

### Example 3

Polylactide sheet samples are extruded in the general manner described in Example 2. The ingredients are i) about 80% of Polylactide D; ii) 8-10% of Polylactide B, iii) 8-10% of a Polylactide C, iv) 2-3% of titanium dioxide powder and v) 0.2 to 0.5% of ethylene bis (stearic acid amide). This mixture is formulated to crystallize more rapidly than the resin blend in Example 2.

Duplicate samples of the sheet are thermoformed in the same manner described in Example 2, except somewhat higher sheet temperatures are achieved, as indicated in Table 2. Crystallinity and FDT are determined as in Example 2. Results are as indicated in Table 2.

**Table 2**

| **Sheet surface temperature (°C)** | **Side wall crystallinity (J/g)** | **Cup base crystallinity (J/g)** | **FDT (°C)** |
|---|---|---|---|
| 175° | 49.8 | 48.0 | > 90° |
| 180° | 49.4 | 47.6 | > 90° |
| 184° | 44.6 | 48.9 | > 90° |

Again, the FDT of the thermoformed parts indicates that the thermoformed sheet is thermally stable enough to be used to produce foam insulation structures of the invention in a pour-in-place process and to remain undistorted when submitted to a thermal cycling test that includes a step of heating the sheet to 50°C to 60°C for 12 to 24 hours. A somewhat higher processing temperature can be used in a fast-crystallizing system such as used in Example 3.

## Claims

1. A foam insulation structure comprising (a) a polymer foam layer having opposing major surfaces and gas-filled cells that contain a physical blowing agent, which polymer foam is a reaction product of a foam precursor mixture containing at least one polyisocyanate, water, and the physical blowing agent, and (b) a non-cellular polylactide sheet containing at least 50% by weight of one or more polylactide resins, wherein said non-cellular polylactide sheet (b) contains at least 25 Joules of polylactide crystallites per gram of polylactide resin(s) in the polylactide resin sheet and is sealingly affixed to at least one of said opposing major surfaces of the polymer foam layer,
wherein the physical blowing agent is selected from one or more of a hydrocarbon having 3 to 8 carbon atoms; a fluorocarbon, hydrofluorocarbon, fluorochlorocarbon, or hydrofluorochlorocarbon having up to 8 carbon atoms; a hydrohaloolefin having up to 8 carbon atoms; and a dialkyl ether having up to 8 carbon atoms;
wherein the amount of crystallinity in the polylactide sheet is measured by differential scanning calorimetry, by heating a 5-10 milligram sample from 25° to 225°C at 20°C/minute under air.

2. The foam insulation structure of claim 1 wherein the physical blowing agent includes cyclopentane.

3. The foam insulation structure of any preceding claim wherein the polylactide crystallites include cocrystals of the polylactide resin(s) and the physical blowing agent.

4. The foam insulation structure of any preceding claim wherein the non-cellular polylactide sheet has a thickness of 0.5 to 10 mm.

5. The foam insulation structure of any preceding claim, wherein the non-cellular polylactide sheet has a storage modulus, as measured by dynamic mechanical analysis at a frequency of 1 Hz and a ramp rate of 5°C/min, of at least 50 MPa at 100°C.

6. The foam insulation structure of any preceding claim, wherein the non-cellular polylactide sheet has a first heat deformation temperature of at least 80°C, wherein the first heat deformation temperature is measured by heating the sheet in an oven at 1°C/min from 25°C to 125°C, taking images of the samples with a camera every 2 minutes, and visually examining the images to determine the temperature at which deformation or movement of the part is first observed.

## Patentansprüche

1. Schaumisolierstruktur, umfassend (a) eine Polymerschaumschicht, die gegenüberliegende Hauptflächen und gasgefüllte Zellen aufweist, die ein physikalisches Treibmittel enthalten, wobei der Polymerschaum ein Reaktionsprodukt aus einer Schaumvorläufermischung ist, die zumindest ein Polyisocyanat, Wasser und das physikalische Treibmittel enthält, und b) eine nichtzelluläre Polylactidlage, die zumindest 50 Gewichts-% von einem oder mehreren Polylactidharzen enthält, wobei die nichtzelluläre Polylactidlage (b) zumindest 25 Joule Polylactidkristallite pro Gramm Polylactidharz(e) in der Polylactidharzlage enthält und abdichtend an zumindest einer der gegenüberliegenden Hauptflächen der Polymerschaumschicht befestigt ist,
wobei das physikalische Treibmittel aus einem oder mehreren von einem Kohlenwasserstoff, der 3 bis 8 Kohlenstoffatome aufweist, einem Fluorkohlenstoff, Hydrofluorkohlenstoff, Fluorchlorkohlenstoff oder Hydrofluorchlorkohlenstoff, der bis zu 8 Kohlenstoffatome aufweist, einem Hydrohalogenolefin, das bis zu 8 Kohlenstoffatome aufweist, und einem Dialkylether, der bis zu 8 Kohlenstoffatome aufweist, ausgewählt ist,
wobei die Menge an Kristallinität in der Polylactidlage durch dynamische Differenzkalorimetrie gemessen wird, indem eine Probe von 5 bis 10 Milligramm bei 20 °C/Minute unter Luft von 25 ° auf 225 °C erwärmt wird.

2. Schaumisolierstruktur nach Anspruch 1, wobei das physikalische Treibmittel Cyclopentan beinhaltet.

3. Schaumisolierstruktur nach einem vorhergehenden Anspruch, wobei die Polylactidkristallite Cokristalle des/der Polylactidharze(s) und des physikalischen Treibmittels beinhalten.

4. Schaumisolierstruktur nach einem vorhergehenden Anspruch, wobei die nichtzelluläre Polylactidlage eine Dicke von 0,5 bis 10 mm aufweist.

5. Schaumisolierstruktur nach einem vorhergehenden Anspruch, wobei die nichtzelluläre Polylactidlage ein Speichermodul wie durch dynamische mechanische Analyse bei einer Frequenz von 1 Hz und einer Rampenrate von 5 °C/Min. gemessen von zumindest 50 MPa bei 100 °C aufweist.

6. Schaumisolierstruktur nach einem vorhergehenden Anspruch, wobei die nichtzelluläre Polylactidlage eine erste Wärmeverformungstemperatur von zumindest 80 °C aufweist, wobei die erste Wärmeverformungstemperatur gemessen wird, indem die Lage in einem Ofen bei 1 °C/Min. von 25 °C auf 125 °C erwärmt wird, alle 2 Minuten Bilder der Proben mit einer Kamera aufgenommen werden und die Bilder visuell untersucht werden, um die Temperatur zu bestimmen, bei der eine Verformung oder Bewegung des Teils als erstes beobachtet wird.

## Revendications

1. Structure isolante en mousse comprenant (a) une couche de mousse de polymère ayant des surfaces principales opposées et des cellules remplies de gaz qui contiennent un agent d'expansion physique, ladite mousse de polymère étant le produit de réaction d'un mélange précurseur de mousse contenant au moins un polyisocyanate, de l'eau et l'agent d'expansion physique, et (b) une feuille de polylactide non-cellulaire contenant au moins 50% en masse d'une ou plusieurs résine(s) polylactide, ladite feuille de polylactide non-cellulaire (b) contenant au moins 25 Joules de cristallites de polylactide par gramme de résine(s) de polylactide dans la feuille de résine polylactide, et étant fixée hermétiquement à au moins l'une desdites surfaces principales opposées de la couche de mousse de polymère,
l'agent d'expansion physique est choisi parmi un ou plusieurs de : un hydrocarbure ayant 3 à 8 atomes de carbone ; un fluorocarbone, hydrofluorocarbone, fluorochlorocarbone ou hydrofluorochlorocarbone ayant jusqu'à 8 atomes de carbone ; une hydrohalogénooléfine ayant jusqu'à 8 atomes de carbone ; et un dialkyl éther ayant jusqu'à 8 atomes de carbone;
la quantité de cristallinité dans la feuille de polylactide est mesurée par calorimétrie différentielle à balayage, en chauffant un échantillon de 5-10 mg de 25°C à 225°C à 20°C/minute dans l'air.

2. Structure isolante en mousse selon la revendication 1, dans laquelle l'agent d'expansion physique comprend du cyclopentane.

3. Structure isolante en mousse selon l'une des revendications précédentes, dans laquelle les cristallites de polylactide comprennent des co-cristaux de résine(s) polylactide et l'agent d'expansion physique.

4. Structure isolante en mousse selon l'une des revendications précédentes, dans laquelle la feuille de polylactide non-cellulaire a une épaisseur de 0,5 à 10 mm.

5. Structure isolante en mousse selon l'une des revendications précédentes, dans laquelle la feuille de polylactide non-cellulaire a un module de stockage, mesuré par analyse mécanique dynamique à une fréquence de 1 Hz et une vitesse de rampe de 5°C/min, d'au moins 50 MPa à 100°C.

6. Structure isolante en mousse selon l'une des revendications précédentes, dans laquelle la feuille de polylactide non-cellulaire a une première température de déformation d'au moins 80°C, la première température de déformation étant mesurée en chauffant la feuille dans un four à 1°C/min de 25°C à 125°C, prenant des images des échantillons avec une caméra toutes les 2 minutes, et en examinant visuellement les images pour déterminer la température à laquelle on observe pour la première fois une déformation ou un mouvement de la pièce.
